# EUROPÄISCHE PATENTSCHRIFT

(11) **EP 3 712 351 B1**
(45) Veröffentlichungstag und Bekanntmachung des Hinweises auf die Patenterteilung: **24.04.2024**
(21) Anmeldenummer: 20156788.0
(22) Anmeldetag: 12.02.2020
(51) Int. Cl.: E04G 11/48, E04G 9/02

(54) **TRAGSTRUKTUR FÜR EIN RAHMENSCHALUNGSPANEEL**
SUPPORTING STRUCTURE FOR A FORMWORK PANEL
STRUCTURE PORTEUSE POUR UN PANNEAU DE COFFRAGE-CADRE

(30) Priorität: 22.03.2019 DE 102019107436
(43) Veröffentlichungstag der Anmeldung: 23.09.2020
(73) Patentinhaber: PERI SE, 89264 Weißenhorn (DE)
(72) Erfinder: Häberle, Wilfried, 89129 Langenau (DE); Hieber, Alexander, 89233 Neu-Ulm (DE); Kirchhoff, Stig, 89287 Bellenberg (DE)
(74) Vertreter: Lorenz, Markus

(56) Entgegenhaltungen:
- EP-A2- 0 735 212
- DE-A1-102015 223 764
- US-A- 3 914 062

## Beschreibung

Gegenstand der Erfindung ist eine Tragstruktur für ein Rahmenschalungspaneel, das eine Tragstruktur und eine mit der Tragstruktur verbundene Schalhaut aufweist, wobei die Tragstruktur zwei Längs-Randträger und zwei Quer-Randträger aufweist.

Tragstrukturen mit zwei Längs-Randträgern und zwei Quer-Randträgern für Rahmenschalungspaneele sind in mannigfachen Ausführungen bekannt. Bei den bekannten Tragstrukturen sind zumeist die genannten Randträger an den vier Eckbereichen der Tragstruktur miteinander verschweißt, wobei diese Verschweißungen in der Lage sein müssen, große Kräfte zu übertragen. Es sind auch Tragstrukturen bekannt, bei denen man an den Eckbereichen Schrägstreben eingeschweißt hat. Dies ist jedoch im Produktionsprozess aufwendig, und man kann die derartigen Tragstrukturen nicht so universell einsetzen, wie es ohne die Schrägstreben möglich war.

DE 10 2015 223764 A1 offenbart eine Tragstruktur für ein Rahmenschalungspaneel,

Aufgabe der Erfindung ist eine verbesserte Tragstruktur zu schaffen.

Diese Aufgabe wird durch die Merkmale des Anspruchs 1 gelöst.

Die erfindungsgemäße Tragstruktur für ein Rahmenschalungspaneel weist eine Tragstruktur und eine mit der Tragstruktur verbundene Schalhaut auf, wobei die Tragstruktur zwei Längs-Randträger und zwei Quer-Randträger aufweist. Erfindungsgemäß ist in mindestens einer Teilanzahl der Eckbereiche der Tragstruktur, wo jeweils ein Längs-Randträger und ein Quer-Randträger zusammenkommen, jeweils ein Eckverbindungsstück vorgesehen, das mit den zwei betreffenden Randträgern verschweißt ist.

Die erfindungsgemäße Tragstruktur kann für Rahmenschalungspaneele für das Gießen von Beton eingesetzt werden, insbesondere Deckenschalungspaneele. Sie kann aber auch für andere Schalungen eingesetzt werden, z. B. für das Abfangen der seitlichen Last einer Erdböschung oder für das temporäre Unterfangen einer Deckenkonstruktion bei Reparaturarbeiten.

Die zwei Längs-Randträger und die zwei Quer-Randträger der Tragstruktur können insgesamt aus Metall sein. Die Längs-Randträger und/oder die Quer-Randträger der Tragstruktur können Strangpressprofile aus Aluminium sein. Gewalzte Profile aus Stahl oder Aluminium sind ebenfalls möglich. Profile aus abgekantetem Aluminiumblech oder Stahlblech sind ebenfalls möglich.

Der Begriff "Aluminium" soll in dieser Anmeldung sowohl unlegiertes Aluminium als auch Aluminiumlegierungen umfassen.

Bei der erfindungsgemäßen Tragstruktur sind Eckverbindungsstücke ins Auge gefasst worden, die sich störungsfrei in die sonstige Tragstruktur-Konstruktion einfügen. Außerdem ist es erfindungsgemäß ermöglicht, die Tragstruktur mitsamt den zu verschweißenden Eckverbindungsstücken auf besonders rationelle Weise zu fertigen.

Bei der erfindungsgemäßen Tragstruktur haben die zwei Längs-Randträger sowie die zwei Quer-Randträger jeweils an ihrer Rückseite einen zum Zentrumsbereich der Tragstruktur hin vorragenden Flansch; und die zu verschweißenden Eckverbindungsstücke sind, jeweils mit den zwei Flanschen der zwei, an der betreffenden Ecke der Tragstruktur zusammenkommenden Randträger verschweißt. Diese Positionierung der betreffenden Eckverbindungsstücke und diese Verschweißung mit den Randträger-Flanschen führen jeweils zu einer sehr stabilen Eckverbindung, einfach ausgebildeten Eckverbindungsstücken und produktionsgünstigen Verschweißungen. Das betreffende Eckverbindungsstück kann entweder an den der Schalhautseite der Tragstruktur zugewandten Vorderseiten oder an den von der Schalhautseite der Tragstruktur abgewandten Rückseiten der zwei Flansche der zwei betreffenden Randträger anliegen.

Die zu verschweißenden Eckverbindungsstücke können jeweils ein Blechstück sein, welches insbesondere in einer Ebene im Wesentlichen parallel zur Tragstruktur-Vorderseite bzw. Schalhaut liegen kann. Bei einer Ausführungsform ist das Blechstück jeweils mit zwei rechtwinklig zueinanderstehenden Schenkeln ausgebildet oder besteht im Wesentlichen aus zwei rechtwinklig zueinanderstehenden Schenkeln.

Bei der erfindungsgemäßen Tragstruktur, wie sie im bisherigen Teil der Beschreibung offenbart worden ist, besteht die Möglichkeit, dass bei mindestens einer Teilanzahl der Ecken der Tragstruktur mindestens einer der Flansche der zwei dort zusammenkommenden Randträger eine Ausnehmung für die Verschweißung mit dem dortigen Eckverbindungsstück aufweist. Die Ausnehmung kann an einem Rand des betreffenden Flanschs sein. Die Ausnehmung kann an einer Gehrungsschräge des betreffenden Flanschs sein. Die in diesem Absatz beschriebenen Ausbildungen schaffen eine gute Voraussetzung dafür, an der betreffenden Ecke der Tragstruktur die zwei dort zusammenkommenden Randträger-Enden im rückseitigen Bereich der Randträger auf für die Produktion einfache Weise zu verschweißen.

Bei der erfindungsgemäßen Tragstruktur, insbesondere wie sie im bisherigen Teil der Beschreibung offenbart worden ist, besteht die Möglichkeit, bei mindestens einem der vier Randträger, vorzugsweise bei den zwei Längs-Randträgern jeweils, mindestens ein Positionierungsstück an einer zwischen den beiden Enden dieses Randträgers gelegenen Stelle vorzusehen, das mit diesem Randträger verschweißt ist und zur Verbesserung der Möglichkeit des dortigen Ansetzens einer Schalungsstütze vorgesehen ist. In den Fällen, wo der betreffende Randträger einen weiter oben genannten Flansch besitzt, kann das mindestens eine Positionierungsstück mit diesem Flansch verschweißt sein. Das Positionsstück kann ein abgewinkeltes Bauteil sein, was für das Verschweißen mit dem betreffenden Randträger günstig ist.

Bei der erfindungsgemäßen Tragstruktur, ist bei mindestens einer der folgenden Schweißverbindungspositionen
a) Schweißverbindung zwischen Längs-Randträger und Eckverbindungsstück;
b) Schweißverbindung zwischen Quer-Randträger und Eckverbindungsstück;
c) Schweißverbindung im Bereich der Gehrungsschrägen zweier dort zusammenkommender Randträger,
mindestens einmal eine Schweißverbindung als Lochschweißverbindung oder als Ausnehmungsschweißung ausgeführt.

Erfindungsgemäß ist im Fall der Lochschweißverbindungsposition(en) a) und b) die Lochschweißverbindung mit einem Loch in dem genannten Flansch des betreffenden Randträgers ausgebildet. Die mindestens eine Lochschweißverbindung kann mit einem Langloch ausgebildet sein.

Das für die Erzeugung der Lochschweißverbindung oder der Langloch-Schweißverbindung erforderliche Loch bzw. Langloch kann in demjenigen Teil der restlichen Tragstruktur vorgesehen sein, mit welchem Teil das betreffende Eckverbindungsstück oder das betreffende Positionierungsstück verschweißt werden soll. Das Loch bzw. das Langloch kann in dem weiter oben genannten Flansch des betreffenden Randträgers ausgebildet sein.

Bei der erfindungsgemäßen Tragstruktur, wie sie im bisherigen Teil der Beschreibung offenbart worden ist, kann mindestens eines der Eckverbindungsstücke und/oder ggf. mindestens eines der Positionierungsstücke jeweils mindestens eine Positionierungsnase zur Erleichterung des dortigen Ansetzens einer Schalungsstütze aufweisen. Dabei kann mindestens eines der Eckverbindungsstücke drei Positionierungsnasen aufweisen, je eine im Bereich eines Schenkels des Eckverbindungsstücks und eine im Innenwinkelbereich der zwei Schenkel des Eckverbindungsstücks. Die Positionierungsnasen erleichtern das dortige Ansetzen einer Schalungsstütze, weil sie für den Eingriffsbereich des Stützenkopfes eine konkrete Ansetzpositionierung vorgeben.

Bei der erfindungsgemäßen Tragstruktur, wie sie im bisherigen Teil der Beschreibung offenbart worden ist, besteht die Möglichkeit, mindestens eines der Eckverbindungsstücke und/oder ggf. mindestens eines der Positionierungsstücke so auszubilden, dass es sich, ggf. mit Ausnahme seiner mindestens einen Positionierungsnase, bei Blickrichtung auf die Rückseite der Tragstruktur insgesamt hinter dem weiter oben genannten Flansch des betreffenden Randträgers, bzw. hinter den weiter oben genannten Flanschen der zwei beteiligten Randträger befindet. Infolgedessen lässt sich die Tragstruktur in der gleichen Weise einsetzen und handhaben, als wenn keine Eckverbindungsstücke und keine Positionierungsstücke vorhanden wären.

An dieser Stelle wird darauf hingewiesen, dass die mit den Randträgern verschweißten Eckverbindungsstücke auf extrem einfache Weise eine sehr willkommene Mehrfachfunktion haben. Sie ermöglichen eine äußerst stabile Verbindung der Randträger der Tragstruktur an den Ecken der Tragstruktur, sie bewirken eine Verstärkung der Tragstruktur in den Eckbereichen, und sie schaffen eine Positionierungshilfe beim Ansetzen eines Stützenkopfes einer Schalungsstütze.

Die erfindungsgemäße Tragstruktur, wie sie im bisherigen Teil der Anmeldung offenbart worden ist, kann ferner Quer-Zwischenträger aufweisen, die parallel zu den Quer-Randträgern verlaufen und sich von Längs-Randträger zu Längs-Randträger erstrecken. Die Quer-Zwischenträger können jeweils mit den zwei Längs-Randträgern verschweißt sein.

Weiterer Gegenstand der Erfindung ist ein Rahmenschalungspaneel, das eine Tragstruktur gemäß einem der Ansprüche 1 bis 8 beziehungsweise wie sie im bisherigen Teil der Beschreibung offenbart worden ist, und an der Vorderseite der Tragstruktur eine mit der Tragstruktur verbundene Schalhaut aufweist. Die geschilderten Vorteile der erfindungsgemäßen Tragstruktur finden sich dann in dem Rahmenschalungspaneel wieder.

Weiterer Gegenstand der Erfindung ist ein Verfahren zur Herstellung einer Tragstruktur gemäß Anspruch 10

Wenn die herzustellende Tragstruktur Quer-Zwischenträger aufweist, kann man auch diese in die Schweißvorrichtung einlegen. Das Verschweißen mit den Längs-Randträgern kann zeitlich vor oder gleichzeitig mit oder nach dem Einschweißen der Eckverbindungsstücke erfolgen.

Bei dem Verfahren kann man die Längs-Randträger, die Quer-Randträger und das mindestens eine zu verschweißende Eckverbindungsstück jeweils mit "Rückseite nach oben" in die Schweißvorrichtung einlegen und dann bequem von oben her schweißen. Man kann entweder so vorgehen, dass die zu verschweißenden Eckverbindungsstücke in die Schweißvorrichtung eingelegt werden und danach die vier Randträger, aufliegend auf diese Eckverbindungsstücke und "Rückseite nach oben" in die Schweißvorrichtung eingelegt werden, und dass danach die Verschweißungen zwischen diesen Eckverbindungsstücken und den Randträgern von oben her erzeugt werden. Man kann aber auch die Reihenfolge umdrehen, also als erstes die Randträger "Rückseite nach oben" in die Schweißvorrichtung einlegen und danach die einzuschweißenden Eckverbindungsstücke an den betreffenden Eckbereichen in einen Abstandsraum zwischen den Vorderseiten der weiter oben genannten Flansche der Randträger und einer Auflagefläche für das jeweilige Eckverbindungsstück einschieben, und dann die Verschweißungen ausführen. Im gleichen Zug, wie die Eckverbindungsstücke eingeschweißt werden, werden auch die Verschweißungen an den weiter oben genannten Flansch-Gehrungsschrägen ausgeführt. Gleiches gilt gegebenenfalls für das Einschweißen der Positionierungsstücke. Zu einem sinnvollen Zeitpunkt können Quer-Zwischenträger der Tragstruktur, die parallel zu den Quer-Randträgern verlaufen und sich von Längs-Randträger zu Längs-Randträger erstrecken, in die Schweißvorrichtung eingelegt und mit den Längs-Randträgern verschweißt werden.

Die Schweißvorrichtung ist so ausgebildet, dass sie Auflagerungsflächen und Anschläge besitzt, derart, dass alle eingelegten Teile eine sichere, positionsgenaue Lage für Gasschweißen haben.

Die Verschweißungen können automatisiert in der Schweißvorrichtung bzw. mit Schweißroboter(n) ausgeführt werden. Auch das Einlegen der Bestandteile der Tragstruktur in die Schweißvorrichtung kann mindestens zum Teil per Einlegeroboter erfolgen.

Die Erfindung und speziellere Ausführungsformen der Erfindung werden nachfolgend anhand eines zeichnerisch dargestellten Ausführungsbeispiels näher erläutert. Es zeigt:
- Fig. 1: eine Tragstruktur, in perspektivischer Darstellung und in Blickrichtung schräg von oben auf die Vorderseite der Tragstruktur;
- Fig. 2: die in Fig. 1 obere Ecke der Tragstruktur, in größerem Maßstab;
- Fig. 3: eine Draufsicht auf die Rückseite der Tragstruktur von Fig. 2, jetzt nicht perspektivisch;
- Fig. 4: ein Schalungspaneel, das eine Tragstruktur gemäß Fig. 1 enthält, in perspektivischer Darstellung und mit Blick von schräg oben auf die Schalhaut des Schalungspaneels;
- Fig. 5: das Schalungspaneel bzw. dessen Tragstruktur von Fig. 4, in perspektivischer Darstellung und mit Blickrichtung von schräg unten auf die Rückseite der Tragstruktur bzw. des Schalungspaneels;
- Fig. 6: ein Eckverbindungsstück, in perspektivischer Darstellung und in größerem Maßstab;
- Fig. 7: ein Positionierungsstück, in perspektivischer Darstellung und in größerem Maßstab;
- Fig. 8: einen Ausschnitt der Tragstruktur von Fig. 1 zeigend einen Eckbereich, in perspektivischer Darstellung und in Blickrichtung von schräg unten, wobei noch keine Schweißungen durchgeführt worden sind;
- Fig. 9: den gleichen Ausschnitt der Tragstruktur wie in Fig. 8, jetzt allerdings nachdem die Schweißungen durchgeführt worden sind.

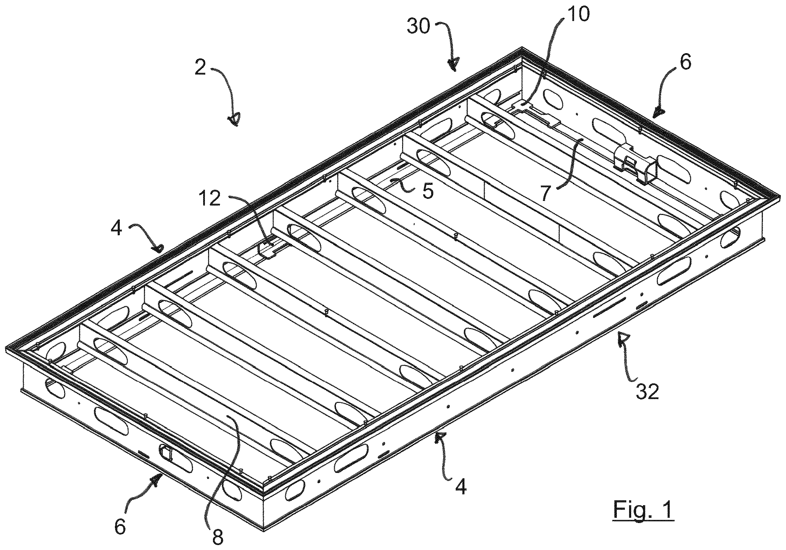

Die in Fig. 1 gezeichnete Tragstruktur 2 ist aus zwei Längs-Randträgern 4, zwei Quer-Randträgern 6 und sieben Quer-Zwischenträgern 8 aufgebaut. Die Quer-Randträger 6 verlaufen rechtwinklig zu den Längs-Randträgern 4. Die Quer-Zwischenträger 8 verlaufen parallel zu den Quer-Randträgern 6 und erstrecken sich von dem einen Längs-Randträger 4 zu dem anderen Längs-Randträger 4.

Außerdem sieht man in Fig. 1 ein Eckverbindungsstück 10 und ein Positionierungsstück 12. Drei weitere Eckverbindungsstücke 10 und ein weiteres Positionierungsstück 12 sind von den Randträgern 4 und 6 verdeckt.

Man sieht, dass die Längs-Randträger 4 und die Quer-Randträger 6 jeweils am rückseitigen Ende einen zum Zentrumsbereich der Tragstruktur 2 hin vorragenden Flansch 5 bzw. 7 haben.

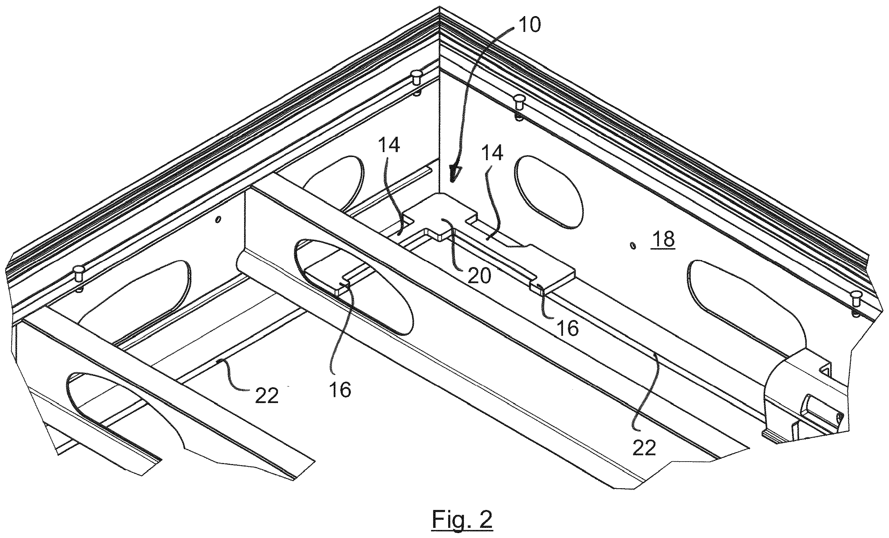

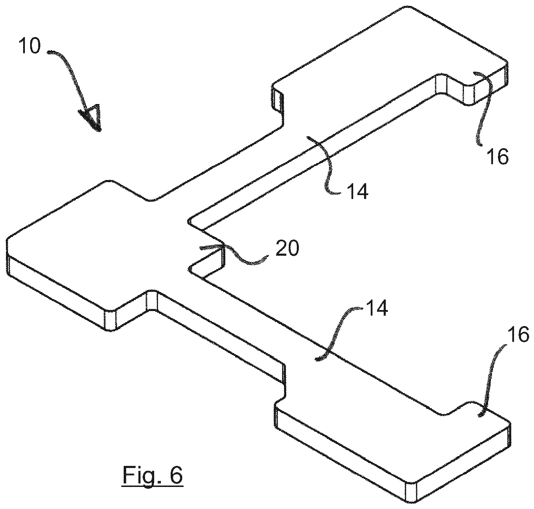

In Fig. 2 sieht man deutlicher, dass das Eckverbindungsstück 10 ein Blechstück mit zwei rechtwinklig zueinander verlaufenden Schenkeln 14 ist. Jeweils am Ende eines Schenkels 14 hat das Eckverbindungsstück 10 eine Nase 16, die von dem Steg 18 des dortigen Randträgers 4 bzw. 6 weggerichtet und zum Innenraum der Tragstruktur 2 hin gerichtet gegenüber dem betreffenden Schenkel 14 vorragt. Das Eckverbindungsstück 10 besitzt in seinem Innenwinkelbereich, von wo die zwei Schenkel 14 ausgehen, eine weitere Nase 20, die im Vergleich zu den Schenkeln zum Innenraum der Tragstruktur 2 hin vorragt. Die Nasen 16 und 20 stehen jeweils ein Stück über den inneren Rand 22 des betreffenden Flanschs 5 bzw. 7 vor. Das Eckverbindungsstück 10 ist in Fig. 6 nochmals für sich, losgelöst von den Randträgern 4 und 6, dargestellt.

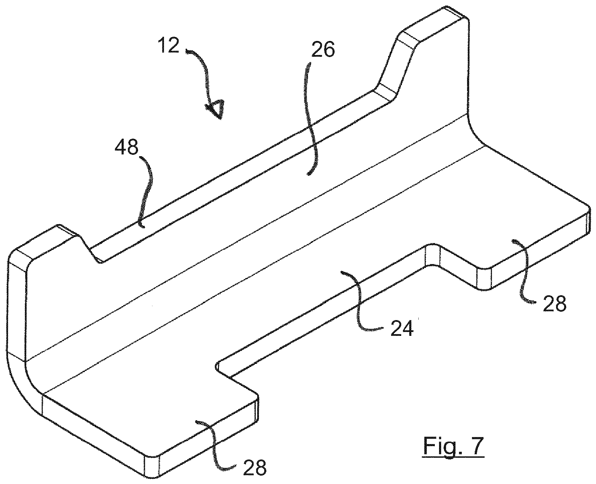

Das in Fig. 1 sichtbare Positionierungsstück 12 ist zum Teil von einem der Quer-Zwischenträger 8 verdeckt. Das vollständige Positionierungsstück ist in Fig. 7 dargestellt. Man sieht, dass das Positionierungsstück 12 eine winkelförmige Gestalt hat, wobei ein erster Schenkel 24 des Positionierungsstücks 12 auf der nach vorn gerichteten Fläche des Flansches 5 des betreffenden Längs-Randträgers 4 aufliegt, während der zweite Schenkel 26 gegen die Innenseite des Stegs 18 des betreffenden Längs-Randträgers 4 anliegt. Der erste Schenkel 24 hat an jedem seiner zwei Enden eine Nase 28, von der ein Teil über den inneren Rand 22 des Flanschs 5 zum Innenraum der Tragstruktur 2 hin übersteht. In Fig. 7 ist das Positionierungsstück 12 für sich allein, losgelöst von der Tragstruktur 2, gezeichnet.

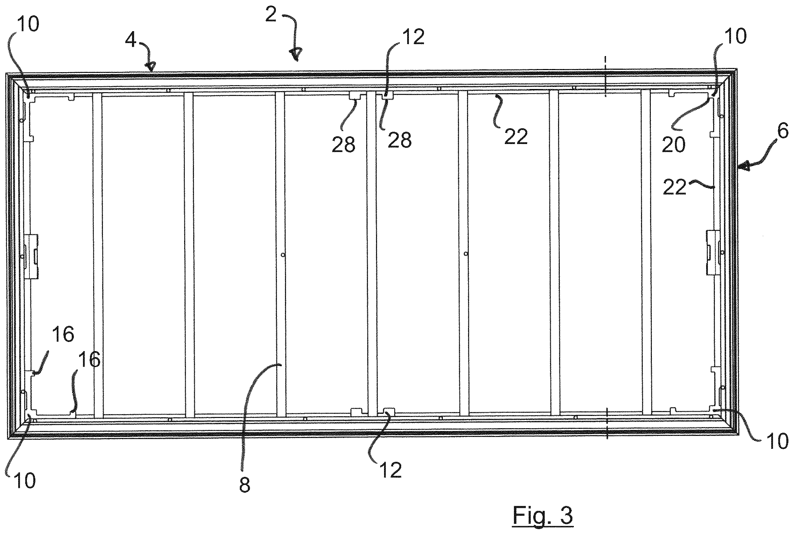

Fig. 3 veranschaulicht, dass bei dem gezeichneten Ausführungsbeispiel für die Tragstruktur 2 insgesamt vier Eckverbindungsstücke 10 und zwei Positionierungsstücke 12 vorhanden sind. In Fig. 3 sieht man auch nochmals, wie die Nasen 16 der Eckverbindungsstücke 10 und die Nase 28 der Positionierungsstücke 12 über den jeweiligen Innenrand des betreffenden Längs-Randträgers 4 bzw. des betreffenden Quer-Randträgers 6 überstehen.

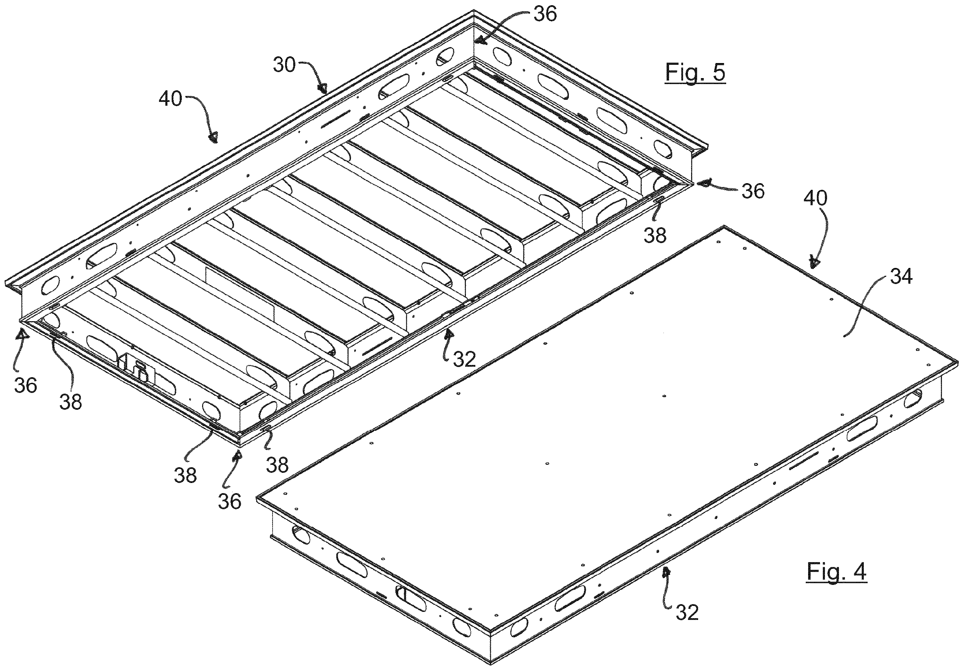

Fig. 4 veranschaulicht, wie an der Vorderseite 30 der Tragstruktur eine Schalhaut 34 angeordnet und an der Tragstruktur 2 befestigt ist. Tragstruktur 2 und Schalhaut 34 zusammen bilden ein Schalungspaneel 40. Mit dem Bezugszeichen 32 ist die Rückseite der Tragstruktur bezeichnet.

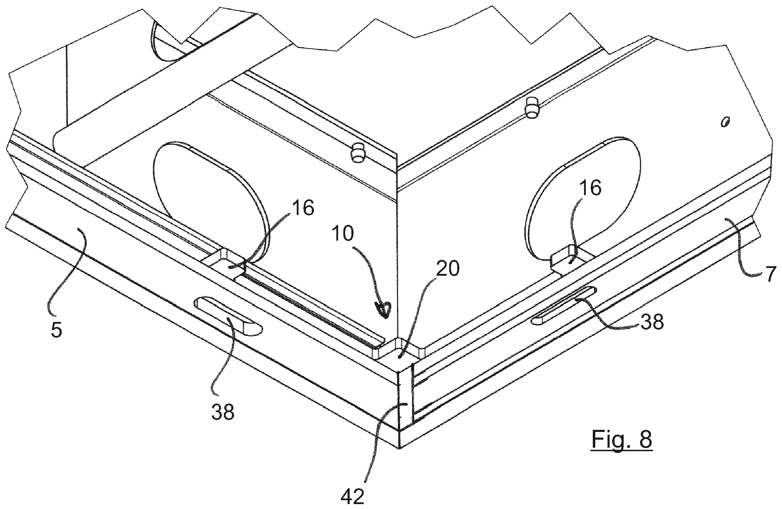

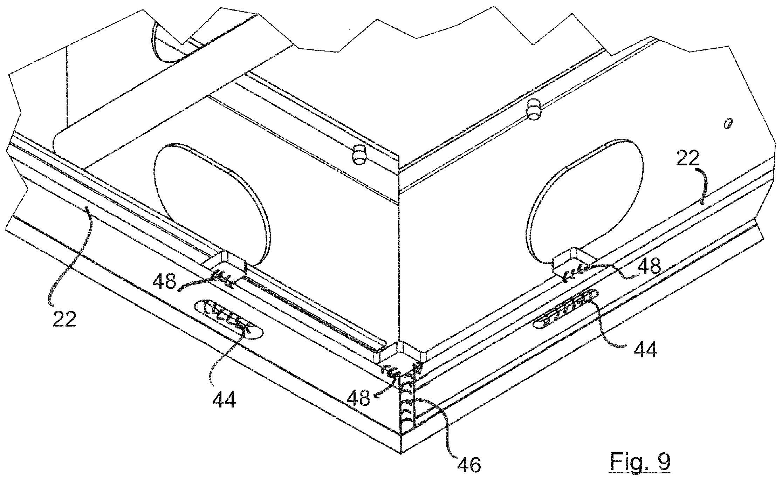

In Fig. 5 sieht man, dass in jedem der vier Eckbereiche 36 der Tragstruktur 2 in den Flanschen 5 und 7 der zwei Randträger 4 und 6, die an dem Eckbereich 36 zusammenkommen, jeweils ein Langloch 38 vorgesehen ist. Die Langlöcher 38 befinden sich jeweils an einer derartigen Stelle, dass das vorderseitig auf dem betreffenden Flansch 5 bzw. 7 positionierte Eckverbindungsstück 10 das Langloch 38 mit seinem Schenkel-Endbereich überdeckt, siehe auch Fig. 8 und 9. In jedes dieser insgesamt acht Langlöcher 38 hinein kann eine Schweißnaht gelegt werden, welche das betreffende Langloch 38 im Wesentlichen ausfüllt und eine Verschweißung zwischen dem betreffenden Eckverbindungsstück 10 und dem betreffenden Flansch 5 bzw. 7 herstellt.

Statt der Langlöcher 38 können Ausnehmungen, vorzugsweise Randausnehmungen, in den Flanschen 5 und 7 vorgesehen sein. Dann kann man in den durch die jeweilige Ausnehmung gebildeten Freiraum hin bis zu dem Eckverbindungsstück 10 hineinschweißen.

Fig. 8 und 9 führen vor Augen, dass an den vier Ecken der Tragstruktur 2 jeweils bei einem der zwei dort zusammenkommenden Randträger 4 und 6 am Ende eine Ausnehmung 42 in dem Flansch 5 bzw. 7 vorhanden ist. Diese Ausnehmung 42 stellt einen Freiraum dar, in den eine Schweißnaht gelegt werden kann, welche die Enden der zwei dort zusammenkommenden Randträger 4 und 6 an den Flanschen 5 bzw. 7 miteinander verschweißt und in der Tiefe bis zu dem Innenwinkelbereich des betreffenden Eckverbindungsstücks 10 geht.

Fig. 9 veranschaulicht den Zustand nach den beschriebenen Verschweißungen. Man sieht die Schweißnähte 44 in den Langlöchern 38 und die Schweißnaht 46 in der Ausnehmung 42. Ferner sieht man, dass man zusätzlich von der Rückseite 32 der Tragstruktur 2 her Schweißnähte 48 am Übergang zwischen den Nasen 16 bzw. 20 und der betreffenden Endkante 22 des betreffenden Flanschs 5 bzw. 7 legen kann.

Bei dem gezeichneten Ausführungsbeispiel sind die zwei Positionierungsstücke 12 nicht mittels Lochschweißung mit dem betreffenden Längs-Randträger 4 verschweißt. Man hat stattdessen eine Schweißnaht, die an der Längskante 48 des zweiten Schenkels 46 des Positionierungsstücks 24, der an dem Steg 18 des betreffenden Längs-Randträgers 4 anliegt, und diesem Steg 18.

Zur Durchführung der Verschweißungen zwischen den Randträgern 4 bzw. 6 und den Eckverbindungsstücken 10 werden die Randträger 4 und 6 "Rückseite nach oben" sowie die Eckverbindungsstücke 10 "Rückseite nach oben" lagegerecht in eine Schweißvorrichtung eingelegt. Hierfür kann man entweder als erstes die Eckverbindungsstücke 10 einlegen und dann die Randträger 4 und 6 darüber positionieren. Oder man kann zuerst die Randträger 4 und 6 "Rückseite nach oben" einlegen und kann danach die Eckverbindungsstücke 10 (Rückseite nach oben) unter die Vorderseiten der Flansche 5 bzw. 7einschieben, wobei die Schweißvorrichtung Auflageflächen für die Vorderseiten der Eckverbindungsstücke 10 bietet. Dann können die beschriebenen Verschweißungen zum einen zwischen den Schenkeln 14 der Eckverbindungsstücke 10 und den Flanschen 5 bzw. 7 der Randträger 4 bzw. 6, und zum anderen zwischen dem Ende des betreffenden Flansches 5 bzw. 7 mit Ausnehmung 42 und dem Eckbereich des Eckverbindungsstücks 10 ausgeführt werden. Die genannten Verschweißungen können bequem von oben von der Rückseite der Tragstruktur 2 her ausgeführt werden. Ein Umpositionieren oder ein Wenden der Tragstruktur 2 ist für diese Schweißungen nicht erforderlich.

## Patentansprüche

1. Tragstruktur für ein Rahmenschalungspaneel, das eine Tragstruktur (2) und eine mit der Tragstruktur (2) verbundene Schalhaut (34) aufweist,
wobei die Tragstruktur (2) zwei Längs-Randträger (4) und zwei Quer-Randträger (6) aufweist,
wobei in mindestens einer Teilanzahl der Eckbereiche der Tragstruktur (2), wo jeweils ein Längs-Randträger (4) und ein Quer-Randträger (6) zusammenkommen, jeweils ein Eckverbindungsstück (10) vorgesehen ist, das mit den zwei betreffenden Randträgern (4,6) verschweißt ist,
wobei die zwei Längs-Randträger (4) sowie die zwei Quer-Randträger (6) jeweils an ihrer Rückseite einen zum Zentrumsbereich der Tragstruktur (2) hin vorragenden Flansch (5,7) haben, und wobei die Eckverbindungsstücke (10) jeweils mit den zwei Flanschen (5,7) der zwei an der betreffenden Ecke der Tragstruktur (2) zusammenkommenden Randträger (4,6) verschweißt sind,
**dadurch gekennzeichnet, dass**
bei mindestens einer der folgenden Schweißverbindungspositionen der Eckverbindungsstücke mit den Flanschen:
a) Schweißverbindung zwischen Längs-Randträger (4) und Eckverbindungsstück (10),
b) Schweißverbindung zwischen Quer-Randträger (6) und Eckverbindungsstück (10),
c) Schweißverbindung im Bereich der Gehrungsschrägen zweier dort zusammenkommender Randträger (4,6),
mindestens einmal eine Schweißverbindung als Lochschweißverbindung oder als Ausnehmungsschweißung ausgeführt ist;
wobei bei mindestens einer Teilanzahl der Ecken der Tragstruktur (2) mindestens einer der Flansche (5,7) der zwei dort zusammenkommenden Randträger (4,6) an seinem Rand eine Ausnehmung (42) für die Verschweißung mit dem dortigen Eckverbindungsstück (10) hat; und/oder im Falle der Lochschweißverbindungsposition(en) a) und b) die Lochschweißverbindung mit einem Loch (38) in dem Flansch (5,7) des betreffenden Randträgers (4,6) ausgebildet ist.

2. Tragstruktur nach Anspruch 1,
**dadurch gekennzeichnet, dass** das jeweilige Eckverbindungsstück (10) an den der Schalhautseite der Tragstruktur (2) zugewandten Vorderseiten oder an den von der Schalhautseite der Tragstruktur (2) abgewandten Rückseiten der zwei Flansche (4,6) der zwei betreffenden Randträger (4,6) anliegt.

3. Tragstruktur nach einem der Ansprüche 1 und 2,
**dadurch gekennzeichnet, dass** das jeweilige Eckverbindungsstück (10) ein Blechstück mit zwei rechtwinklig zueinander stehenden Schenkeln (14) ist.

4. Tragstruktur nach einem der Ansprüche 1, 2 oder 3,
**dadurch gekennzeichnet, dass** bei mindestens einer Teilanzahl der Ecken der Tragstruktur (2) mindestens einer der Flansche (5,7) der zwei dort zusammenkommenden Randträger (4,6) eine Ausnehmung (42) für die Verschweißung mit dem dortigen Eckverbindungsstück (10) aufweist.

5. Tragstruktur nach einem der Ansprüche 1 bis 4,
**dadurch gekennzeichnet, dass** bei mindestens einer Teilanzahl der Ecken der Tragstruktur (2) die genannten Flansche (5,7) der zwei dort zusammenkommenden Randträger (4,6) Gehrungsschrägen aufweisen; und dass bei einem der Flansche (5,7) eine Ausnehmung (42) an der Gehrungsschräge vorgesehen ist.

6. Tragstruktur nach einem der Ansprüche 1 bis 5,
**dadurch gekennzeichnet, dass** mindestens eines der Eckverbindungsstücke (10) mindestens eine Positionierungsnase zur Erleichterung des dortigen Ansetzens einer Schalungsstütze aufweist.

7. Tragstruktur nach Anspruch 6,
**dadurch gekennzeichnet, dass** mindestens eines der Eckverbindungsstücke (10) drei Positionierungsnasen aufweist, je eine im Bereich eines Schenkels des Eckverbindungsstücks (10) und eine im Innenwinkelbereich der zwei Schenkel des Eckverbindungsstücks (10).

8. Tragstruktur nach Anspruch 6 oder 7,
**dadurch gekennzeichnet, dass** mindestens eines der Eckverbindungsstücke (10) so ausgebildet ist, dass es sich, ggf. mit Ausnahme seiner mindestens einen Positionierungsnase, bei Blickrichtung auf die Rückseite der Tragstruktur insgesamt hinter dem genannten Flansch (5,7) des betreffenden Randträgers (4,6) bzw. hinter den genannten Flanschen (5,7) der zwei beteiligten Randträger (4,6) befindet.

9. Rahmenschalungspaneel,
**dadurch gekennzeichnet, dass** es eine Tragstruktur (2) gemäß einem der Ansprüche 1 bis 8 und an der Vorderseite der Tragstruktur (2) eine mit der Tragstruktur (2) verbundene Schalhaut (34) aufweist.

10. Verfahren zur Herstellung einer Tragstruktur gemäß einem der Ansprüche 1 bis 8,
**dadurch gekennzeichnet, dass** die Längs-Randträger (4), die Quer-Randträger (6), und das mindestens eine zu verschweißende Eckverbindungsstück (10) in eine Schweißvorrichtung eingelegt werden; und dass die Schweißverbindungen zwischen den Randträgern (4,6) und die Schweißverbindungen zwischen den genannten Eckverbindungsstücken (10) und den Randträgern (4,6) von der Rückseite der Tragstruktur (2) her ausgeführt werden,
wonach mindestens eine Teilanzahl der Schweißverbindungen durch ein betreffendes Flansch-Loch oder durch eine betreffende Flansch-Ausnehmung ausgeführt wird.

## Claims

1. Support structure for a frame formwork panel comprising a support structure (2) and a formwork skin (34) connected to the support structure (2),
wherein the support structure (2) has two longitudinal edge girders (4) and two transverse edge girders (6),
wherein in at least some of the corner regions of the support structure (2) where a longitudinal edge girder (4) and a transverse edge girder (6) come together a corner connecting piece (10) which is welded to the two respective edge girders (4,6) is provided,
wherein the two longitudinal edge girders (4) and the two transverse edge girders (6) each have, on their rear side, a flange (5,7) projecting toward the center region of the support structure (2), and wherein the corner connecting pieces (10), each are welded to the two flanges (5,7) of the two edge girders (4,6) coming together at the respective corner of the support structure (2),
**characterized in that**
in at least one of the following weld connection positions of the corner connecting pieces with the flanges:
a) a welded connection between the longitudinal edge girder (4) and the corner connecting piece (10);
b) a welded connection between the transverse edge girder (6) and the corner connecting piece (10);
c) a welded connection in the region of the miter surfaces of two edge girders (4,6) coming together there
a welded connection is configured as a plug weld connection or as a recess weld at least once, wherein in at least some of the corners of the support structure (2), at least one of the flanges (5,7) of the two edge girders (4,6) coming together there has a recess (42) at its edge for welding with the corner connecting piece (10) positioned there; and/or in the case of the plug weld connection position(s) a) and b) the plug weld connection is formed with a hole (38) in the flange (5,7) of the respective edge girder (4,6).

2. Support structure according to claim 1,
**characterized in that** the respective corner connecting piece (10) rests on the front sides facing the formwork skin side of the support structure (2) or on the rear sides of the two flanges (5,7) of the two respective edge girders (4,6) facing away from the formwork skin side of the support structure (2).

3. Support structure according to one of claims 1 or 2,
**characterized in that** the respective corner connecting piece (10) is a metal piece with two legs (14) that are perpendicular to each other.

4. Support structure according to one of claims 1, 2 or 3,
**characterized in that** in at least some of the corners of the support structure (2), at least one of the flanges (5,7) of the two edge girders (4,6) coming together there has a recess (42) for welding to the corner connecting piece (10) there.

5. Support structure according to one of claims 1 to 4,
**characterized in that** in at least some of the corners of the support structure (2), the flanges (5,7) of the two edge girders (4,6) coming together there comprises miter surfaces; and that a recess (42) is provided on the miter surface of one of the flanges (5,7).

6. Support structure according to one of claims 1 to 5,
**characterized in that** at least one of the corner connecting pieces (10) has at least one positioning lug to facilitate the attachment of a formwork prop there.

7. Support structure according to claim 6,
**characterized in that** at least one of the corner connecting pieces (10) comprises three positioning lugs, one each in the region of a leg of the corner connecting piece (10) and one in the interior angle region of the two legs of the corner connecting piece (10).

8. Support structure according to claim 6 or 7,
**characterized in that** at least one of the corner connecting pieces (10) is formed in such a way that it is positioned, possibly with the exception of its at least one positioning lug, behind the flange (5,7) of the respective edge girder (4,6) or behind the flanges (5,7) of the respective two edge girders (4,6) when facing the rear of the support structure as a whole.

9. Frame formwork panel,
**characterized in that** it has a support structure (2) according to one of claims 1 to 8 and a formwork skin (34) at the front of the support structure (2) that is connected to the support structure (2).

10. Method for creating a support structure according to one of claims 1 to 8,
**characterized in that** the longitudinal edge girders (4), the transverse edge girders (6), and the at least one corner connecting piece (10) to be welded are placed in a welding device; and that the welded connections between the edge girders (4,6) and the welded connections between said corner connecting pieces (10) and the edge girders (4,6) are fashioned from the rear of the support structure (2),
after which at least some of the welded connections are fashioned by means of a respective flange hole or by means of a respective flange recess.

## Revendications

1. Structure porteuse pour un panneau de coffrage cadre comportant une structure porteuse (2) et une peau coffrante (34) fixée à la structure porteuse (2), dans laquelle la structure porteuse (2) comporte deux armatures latérales longitudinales (4) et deux armatures latérales transversales (6), dans laquelle un élément de connexion d'angle (10) est prévu dans chacune d'au moins une partie des zones d'angle de la structure porteuse (2) où une armature latérale longitudinale (4) et une armature latérale transversale (6) se rencontrent, ledit élément de connexion d'angle (10) étant soudé sur lesdites deux armatures latérales (4, 6),
dans laquelle les deux armatures latérales longitudinales (4) et les deux armatures latérales transversales (6) sont pourvues chacune sur leur face arrière d'une aile (5, 7) en saillie en direction de la zone centrale de la structure porteuse (2), et dans laquelle les éléments de connexion d'angle (10) sont soudés chacun sur les deux ailes (5, 7) des deux armatures latérales (4, 6) qui se rencontrent audit angle de la structure porteuse (2),
**caractérisée en ce que**,
à au moins l'une des positions suivantes des liaisons soudées des éléments de connexion d'angle sur les ailes :
a) liaison soudée entre l'armature latérale longitudinale (4) et l'élément de connexion d'angle (10),
b) liaison soudée entre l'armature latérale transversale (6) et l'élément de connexion d'angle (10),
c) liaison soudée dans la zone des coupes en onglet des deux armatures latérales (4, 6) qui se rencontrent en ce point, une liaison soudée est réalisée au moins une fois sous la forme d'une liaison soudée en bouchon ou d'une soudure par emboîtement ; dans laquelle pour au moins une partie des angles de la structure porteuse (2), au moins l'une des ailes (5, 7) des deux armatures latérales (4, 6) qui se rencontrent en ce point possède sur son bord un évidement (42) pour l'assemblage par soudage avec l'élément de connexion d'angle (10) présent en ce point ; et/ou, dans le cas de la ou des positions des liaisons soudées par bouchon a) et b), la liaison soudée en bouchon est réalisée au moyen d'une ouverture (38) dans l'aile (5, 7) de ladite armature latérale (4, 6).

2. Structure porteuse selon la revendication 1,
**caractérisée en ce que**, chaque élément de connexion d'angle (10) est en contact avec les faces avant orientées vers le côté de la peau coffrante de la structure porteuse (2) ou avec les faces arrière opposées au côté de la peau coffrante de la structure porteuse (2) des deux ailes (5, 7) desdites deux armatures latérales (4, 6).

3. Structure porteuse selon l'une des revendications 1 et 2,
**caractérisée en ce que**, chaque élément de connexion d'angle (10) est une pièce en tôle pourvue de deux pattes (14) perpendiculaires entre elles.

4. Structure porteuse selon l'une des revendications 1, 2 ou 3,
**caractérisée en ce que**, pour au moins une partie des angles de la structure porteuse (2), au moins l'une des ailes (5, 7) des deux armatures latérales (4, 6) qui se rencontrent en ce point comporte un évidement (42) pour le soudage avec l'élément de connexion d'angle (10) présent en ce point.

5. Structure porteuse selon l'une des revendications 1 à 4,
**caractérisée en ce que**, pour au moins une partie des angles de la structure porteuse (2), lesdites ailes (5, 7) des deux armatures latérales (4, 6) qui se rencontrent en ce point comportent des coupes en onglet ; et **en ce qu'**un évidement (42) est prévu sur la coupe en onglet de l'une des ailes (5, 7).

6. Structure porteuse selon l'une des revendications 1 à 5,
**caractérisée en ce, qu'**au moins l'un des éléments de connexion d'angle (10) comporte au moins un tenon de positionnement pour faciliter la mise en place à cet endroit d'un étai de coffrage.

7. Structure porteuse selon la revendication 6,
**caractérisée en ce, qu'**au moins l'un des éléments de connexion d'angle (10) comporte trois tenons de positionnement, un dans la zone de chaque patte de l'élément de connexion d'angle (10) et un dans la zone de l'angle intérieur formé par les deux pattes de l'élément de connexion d'angle (10).

8. Structure porteuse selon la revendication 6 ou 7,
**caractérisée en ce, qu'**au moins l'un des éléments de connexion d'angle (10) est réalisé de sorte qu'il se trouve dans son ensemble, le cas échéant à l'exception de son au moins un tenon de positionnement, derrière ladite aile (5, 7) de l'armature latérale (4, 6) concernée ou derrière lesdites ailes (5, 7) des deux armatures latérales (4, 6) concernées, en regardant vers la face arrière de la structure porteuse.

9. Panneau de coffrage cadre,
**caractérisé en ce, qu'**il comporte une structure porteuse (2) selon l'une des revendications 1 à 8 et, sur la face avant de la structure porteuse (2), une peau coffrante (34) fixée à la structure porteuse (2).

10. Procédé de fabrication d'une structure porteuse selon l'une des revendications 1 à 8, **caractérisé en ce que**, les armatures latérales longitudinales (4), les armatures latérales transversales (6), et ledit au moins un élément de connexion d'angle (10) à souder sont posés dans un dispositif de soudage ; et **en ce que** les liaisons soudées entre les armatures latérales (4, 6) et les liaisons soudées entre lesdits élément de connexion d'angle (10) et les armatures latérales (4, 6) sont réalisées depuis la face arrière de la structure porteuse (2), au moins une partie des liaisons soudées étant réalisées au moyen d'une ouverture dans l'aile ou d'un évidement dans l'aile.
